# EUROPÄISCHE PATENTANMELDUNG

(11) **EP 0 685 426 A1**
(43) Veröffentlichungstag der Anmeldung: **06.12.1995**
(21) Anmeldenummer: 95107154.7
(22) Anmeldetag: 11.05.1995
(51) Int. Cl.: C01B 31/02

(54) **Verfahren zur Anreicherung von Fullerenen mit mehr als 70 Kohlenstoff-Atomen**

(30) Priorität: 24.05.1994 DE 4418100
(71) Anmelder: HOECHST AKTIENGESELLSCHAFT, D-65929 Frankfurt am Main (DE)
(72) Erfinder: Müller, Wolfgang, Dr., D-65207 Wiesbaden (DE)

(57) **Zusammenfassung**

Die Erfindung betrifft ein Verfahren zur Anreicherung von Fullerenen mit mehr als 70 C-Atomen, das dadurch gekennzeichnet ist, daß
a) eine Benzol- oder Toluollösung eines Fullerenrohextraktes auf eine chromatographische Trennsäule, beladen mit Koks, Anthrazit und/oder Graphit als Trägermaterial, aufgetragen wird und anschließend
b) die auf der Trennsäule absorbierten Fullerene mit mehr als 70 C-Atomen mit einem mehrfach alkylierten und/oder ein- oder mehrfach halogenierten aromatischen Elutionsmittel von der Trennsäule desorbiert werden.

## Beschreibung

Die üblicherweise mit dem Lichtbogen- oder Widerstandsheizungsverfahren hergestellten Fullerenruße enthalten - neben C₆₀ und C₇₀ - noch sogenannte höhere Fullerene mit mehr als 70 C-Atomen.

Nach der Extraktion des Fullerenrußes mit Benzol oder Toluol enthält der Rohextrakt normalerweise nur etwa 1-2 Gew.-% eines komplexen Gemisches an höheren Fullerenen.

Nur durch Verwendung speziell präparierter, nicht kommerziell erhältlicher Elektroden konnte dieser Anteil erstmals auf ca. 10 % gesteigert werden (Bethune et al. US-A-5 275 705).

Die Reindarstellung der höheren Fullerene, ausgehend vom Rohextrakt, ist durch chromatographische Trennung gelungen (D. Herren, J. Chromatogr. 644(1), 188-92, 1993).

Besonders interessant ist, daß auch Stereoisomere von höheren Fullerenen aufgetrennt werden können.

Somit bietet diese Substanzklasse die einmalige Möglichkeit zum Studium von enantiomeren und diastereomeren Formen des Elements Kohlenstoff.

Es bestand daher die Aufgabe ein verbessertes, großtechnisch nutzbares Verfahren zu entwickeln, das Fullerene mit mehr als 70 C-Atomen in höheren Ausbeuten liefert.

Gegenstand der Erfindung ist ein Verfahren zur Anreicherung von Fullerenen mit mehr als 70 C-Atomen, dadurch gekennzeichnet, daß
a) eine Benzol- oder Toluollösung eines Fullerenrohextraktes auf eine chromatographische Trennsäule, beladen mit Koks, Anthrazit und/oder Graphit als Trägermaterial, aufgetragen wird und anschließend
b) die auf der Trennsäule absorbierten Fullerene mit mehr als 70 C-Atomen mit einem mehrfach alkylierten und/oder ein- oder mehrfach halogenierten aromatischen Elutionsmittel von der Trennsäule desorbiert werden.

Die Benzol- oder Toluollösung des Fullerenrohextraktes ist durch fest/flüssig-Extraktion von fullerenhaltigem Ruß mit Benzol, Toluol, Benzol/Toluolmischungen oder homogenen Mischungen mit anderen Lösemitteln, wobei Benzol bzw. Toluol deren Hauptbestandteil darstellen, erhältlich. Bevorzugt werden Toluollösungen des Fullerenrohextraktes verwendet. Die gesättigten Rohextraktlösungen enthalten 0,5 - 10, vorzugsweise 1 bis 2, Gew.- % der Fullerene > C₇₀. Die Hauptkomponenten des Rohextraktes sind C₆₀ (ca. 80 Gew.-%) und C₇₀ (ca. 18 Gew.-%).

Die Trägermaterialien Koks, Anthrazit und Graphit eignen sich aufgrund ihrer Gefügestruktur, Kristallmodifikation und Porosität in besonderer Weise zur beschriebenen Auftrennung von Fullerenen.

In diesem Sinne sind folgende Kohlenstoffmaterialien dazu geeignet:
I) Kokse auf Basis Petrolpech und Kohlepech;
II) Kokse, die über Mesophase hergestellt werden;
III) Kokse auf Basis Ruß;
IV) Anthrazit;
V) Graphite auf Basis von I) bis III);
VI) Gemische aus obigen Klassifikationen.

Der Aschegehalt der Trägermaterialien sollte wegen möglicher Wechselwirkungen begrenzt sein, beispielsweise auf < 1 bis 0,1 Gew. %, wobei auch höhere Werte noch tolerabel sein können. Welche Werte tolerabel sind kann in einfachen Versuchen ohne erfinderischen Aufwand festgestellt werden.

Die Kohlenstoffmaterialien müssen in gemahlener Form eingebracht werden, wobei die Mahlung nicht zu grob (fehlende Trennschärfe) und nicht zu fein (zu großer Strömungswiderstand) sein sollte. Beispielsweise eignet sich bevorzugt eine Körnung mit einem mittleren Korndurchmesser D (D 50 %) von ca. 10 bis 40 µm bei einer Schüttdichte von ca. 0,4 bis 0,6 g/cm³ und einer Stampfdichte von 0,8 bis 1,1 g/cm³.

Das Trägermaterial hat im allgemeinen eine BET-Oberfläche von 3 bis 15 m²/g, vorzugsweise 6 - 8 m²/g.

Das auf die Säule aufgegebene Rohextrakt-Volumen beträgt 5 bis 30 %, vorzugsweise 10 bis 20 %, des Säulenbettvolumens.

Die Fullerene > C₇₀ werden auf dem Säulenmaterial vollständig absorbiert, wohingegen C₆₀ und C₇₀ eluiert werden (Wiederfindungsrate > 98 %).

Der Verfahrensschritt a) wird im allgemeinen 1 bis 25mal, vorzugsweise 8 bis 18mal, durchgeführt so daß sich die Fullerene > C₇₀ auf der Trennsäule anreichern.

Für den Verfahrensschritt b) können als Elutionsmittel mehrfach alkylierte Benzole oder Naphthaline wie Mesitylen, Tetramethylbenzol, Diisopropylnaphthalin, Halogenbenzole beispielsweise Dichlor- oder Trichlorbenzol, deren Mischungen oder homogene Mischungen mit anderen Lösemitteln, wobei das mehrfach alkylierte und/oder ein- oder mehrfach halogenierte aromatische Lösemittel den Hauptbestandteil des Elutionsmittels darstellt, verwendet werden.

Das Elutionsmittel wird in einer Menge von 20 bis 200 Vol.-%, vorzugsweise 40 bis 100 Vol.-%, bezogen auf das Bettvolumen der Trennsäule, eingesetzt.

Das erfindungsgemäße Verfahren kann im Nieder-, Mittel und Hochdruckbereich in einem Temperaturbereich von 10 bis 50°C durchgeführt werden. Bevorzugt wird das Verfahren im Niederdruckbereich bis maximal ca. 2 bar bei einer Temperatur von 15 bis 25°C durchgeführt.

Durch das erfindungsgemäße Verfahren gelingt es einen Extrakt von Fullerenen bereitzustellen, der mehr als 50 Gew.-% an Fullerenen > C₇₀ enthält. Mit einem solchen Konzentrat sind weitere chromatographische Trennschritte zur Reindarstellung höherer Fullerene in größeren Mengen viel effektiver.

Bedingt durch ihre elektrooptischen und elektromagnetischen Eigenschaften können Fullerene > C₇₀ auf dem Gebiet der molekularen Elektronik verwendet werden. Chirale Fullerene > C₇₀ können auch zur Herstellung von chiralen Trennsäulen zur Enantiomeren-Analyse verwendet werden.

### Beispiel 1:

Eine 36 l-Trennsäule wurde mit in Toluol aufgeschlämmtem SIGRI-Graphit HR 70 (bestehend aus 2/3-Anthrazit und 1/3 Petrolgraphit des mittleren Korndurchmessers 38 µm, der Schüttdichte 0,52 g/cm³ und der Hauptdichte 0,89 g/cm³) beladen und das Säulenmaterial mit 0,5 bar verdichtet.

### a) Absorption der höheren Fullerene:

Pro Lauf wurden 5,12 l (14,2 % des Bettvolumens) einer gesättigten toluolischen Rohfullerenlösung (HPLC-Zusammensetzung: C₆₀: 81,2 %, C₇₀: 3,2 g = 17,3 %, > C₇₀: 0,28 g = 1,5 %), auf die Säule aufgetragen. Insgesamt wurden 10 Läufe durchgeführt. Dabei wurden ca. 280 mg Fulleren > C₇₀ auf der Säule absorbiert.

### b) Desorption der höheren Fullerene:

Man eluiert mit 3,5 l (67 % des Bettvolumens) Dichlorbenzol, anschließend noch mit 2 Bettvolumina Toluol. Man erhält eine gelb-bräunliche Fraktion mit insgesamt 205 mg höheren Fullerenen (73 % d.Th.). Die höheren Fullerene (laut FAB-MS: C₇₆-C₉₄) sind dabei zu 56 Gew.-% neben C₆₀ (25 Gew.-%) und C₇₀ (19 Gew.-%) enthalten. Die höheren Fullerene wurden also von 1,5 Gew.-% auf 56 Gew.-% (Faktor 37) aufkonzentriert.

## Patentansprüche

1. Verfahren zur Anreicherung von Fullerenen mit mehr als 70 C-Atomen, dadurch gekennzeichnet, daß
a) eine Benzol- oder Toluollösung eines Fullerenrohextraktes auf eine chromatographische Trennsäule, beladen mit Koks, Anthrazit und/oder Graphit als Trägermaterial, aufgetragen wird und anschließend
b) die auf der Trennsäule absorbierten Fullerene mit mehr als 70 C-Atomen mit einem mehrfach alkylierten und/oder ein- oder mehrfach halogenierten aromatischen Elutionsmittel von der Trennsäule desorbiert werden.

2. Verfahren gemäß Anspruch 1, dadurch gekennzeichnet, daß der Fullerenrohextrakt in einer Menge von 5 bis 30 Vol.%, in bezug auf das Trennsäulenbettvolumen, eingesetzt wird.

3. Verfahren gemäß Anspruch 1 oder 2, dadurch gekennzeichnet, daß der Verfahrensschritt a) mehrmals wiederholt wird.

4. Verfahren gemäß Anspruch 3, dadurch gekennzeichnet, daß der Verfahrensschritt a) 1 bis 25mal durchgeführt wird.

5. Verwendung von Fullerenen mit mehr als 70 C-Atomen in der molekularen Elektronik.
